# EUROPÄISCHE PATENTSCHRIFT

(11) **EP 3 864 327 B1**
(45) Veröffentlichungstag und Bekanntmachung des Hinweises auf die Patenterteilung: **27.09.2023**
(21) Anmeldenummer: 19779858.0
(22) Anmeldetag: 27.09.2019
(51) Int. Cl.: G05D 16/10, F16K 3/26, F16K 47/06

(54) **HOCHDRUCKVENTIL FÜR EINE GESTEUERTE DRUCKABSENKUNG**
HIGH-PRESSURE VALVE FOR CONTROLLED REDUCTION IN PRESSURE
SOUPAPE HAUTE PRESSION PERMETTANT UNE BAISSE DE PRESSION RÉGULÉE

(30) Priorität: 11.10.2018 DE 102018217383
(43) Veröffentlichungstag der Anmeldung: 18.08.2021
(73) Patentinhaber: Uhde High Pressure Technologies GmbH, 58093 Hagen (DE); thyssenkrupp AG, 45143 Essen (DE)
(72) Erfinder: NÜNNERICH, Peter, 57080 Siegen (DE); KNAUF, Wilfried, 58313 Herdecke (DE)
(74) Vertreter: thyssenkrupp Intellectual Property GmbH
(86) Internationale Anmeldenummer: PCT/EP2019/076235
(87) Internationale Veröffentlichungsnummer: WO 2020/074276

(56) Entgegenhaltungen:
- WO-A1-86/04821
- DD-A3- 274 756
- DE-A1- 3 124 034
- DE-A1-102005 046 065
- DE-C2- 3 124 034
- GB-A- 2 366 352

## Beschreibung

Die vorliegende Erfindung betrifft ein Hochdruckventil für eine gesteuerte Druckabsenkung bei der Hochdruckbehandlung von Produkten sowie ein Verfahren zur gesteuerten Druckabsenkung mit dem erfindungsgemäßen Hochdruckventil.

Bei der Hochdruckbehandlung werden die Produkte in einer Hochdruckkammer von einem Hochdruckmedium beaufschlagt und beispielsweise mit einem Druck bis zu 10000 bar behandelt. Das Hochdruckmedium verlässt die Hochdruckkammer meistens gesteuert durch ein Hochdruckventil zu einem Raum, in dem Hochdruckmedium gesammelt wird, während der Druck in der Hochdruckkammer reduziert wird.

Chargenweise betriebene Hochdruckprozesse zeichnen sich in der Regel durch mindestens zwei Prozessphasen aus, nämlich eine erste Phase, in der ein Druckaufbau erfolgt und eine sich daran anschließende Phase, in der ein Druckabbau erfolgt. Bei derartigen Prozessen kann es notwendig sein, die Geschwindigkeit des Druckabbaus regelbar zu drosseln. Beispielhafte Anwendungen für derartige chargenweise betriebene Hochdruckprozesse sind die Kompaktierung von keramischen oder metallischen Pulvern (CIP) oder die Hochdruckbehandlung von schutzgasverpackten Lebensmitteln. Die Lebensmittel befinden sich in einem Verpackungsbeutel unter Schutzgas und durch die Beaufschlagung mit dem Hochdruckmedium von außen her wird der Verpackungsbeutel komprimiert, so dass das Schutzgas, welches zum Oberflächenschutz des Produktes dient, auch in das Lebensmittel eindringt. Bei diesen Anwendungen besteht das Problem, dass eingeschlossene Gase nicht schnell genug aus dem Produkt und/oder der Verpackung herausdiffundieren können, so dass es beim Ausgasen zu Schäden im Produkt und in der Verpackung kommt. Als Hochdruckmedium wird bei diesen Anwendungen in der Regel Wasser eingesetzt.

Die Überwindung sehr hoher Druckdifferenzen bei der Druckabsenkung (Drosselung) resultiert oft in sehr hohen Strömungsgeschwindigkeiten, wenn die Strömung über Querschnittssprünge gedrosselt wird. Dadurch kann es zu strömungsbedingter Erosion, insbesondere durch Kavitation kommen. Daher wird angestrebt, eine Lösung für ein solches Problem durch Spaltströmung zu finden.

Die Druckschrift DE 3 124 034 A1 offenbart ein Druckentspannungsventil welches einen in einer Längsbohrung in einem Ventilgehäuse axial beweglich ausgestalteten Ventilkolben aufweist.

Die Verringerung des Drucks in einer Hochdruckkammer mittels zwei Ventilen ist in WO 2006/129180 A1 offenbart. Dabei ist zum Auslassen des Hochdruckmediums aus der Hochdruckkammer eine Leitung mit zwei hintereinander geschalteten Entspannungsventilen vorgesehen. Zwischen den beiden Entspannungsventilen ist eine Zwischendruckkammer angeordnet zur Aufnahme des Hochdruckmediums, um den Druck vom ersten Druckventil zum zweiten Druckventil schrittweise zu reduzieren und die Erosion in den Ventilen zu verhindern.

Bei dieser bekannten Vorrichtung ist das Ausführen des Verfahrens mit den Entspannungsventilen und der Zwischendruckkammer technisch aufwendig.

Die Schrift DE 10 2009 042 088 A1 behandelt eine Vorrichtung und ein Verfahren zur Hochdruckbehandlung von verpackten Lebensmitteln, wobei der Druckabbau in einer Hochdruckkammer in drei Phasen erfolgt. Zum Betreiben des Verfahrens ist eine Reihe von verschiedenen Ventilen vorgesehen.

Bei den vorgenannten Prozessen wird insbesondere Wasser als Hochdruckmedium eingesetzt. Ab einem bestimmten Druck muss der Druckabbau (die Entspannung) vergleichsweise langsam und geregelt erfolgen, wozu man ein geeignetes Hochdruckventil des in der vorliegenden Anmeldung beschriebenen Typs benötigt.

Die Aufgabe der vorliegenden Erfindung besteht somit darin, ein konstruktiv einfaches erosionsarmes Hochdruckventil für eine gesteuerte Druckabsenkung bei der Hochdruckbehandlung von Produkten zur Verfügung zu stellen, wobei mit dem Hochdruckventil der Druck effektiv und kontrolliert in der Hochdruckkammer reduziert wird. Aufgabe der Erfindung ist es ferner, ein Verfahren zur gesteuerten Druckabsenkung mit dem erfindungsgemäßen Hochdruckventil zur Verfügung zu stellen.

Die Lösung der vorgenannten Aufgabe liefert ein Hochdruckventil der eingangs genannten Art mit den Merkmalen des Anspruchs 1 bzw. ein Verfahren zur gesteuerten Druckabsenkung mit den Merkmalen des Anspruchs 6.

Erfindungsgemäß ist vorgesehen, dass das Hochdruckventil für eine variable, insbesondere eine gesteuerte Druckabsenkung bei einer Hochdruckbehandlung von Produkten folgende Merkmale umfasst:
einen mit einem in Bezug auf die Achse des Ventilkolbens seitlichen Einlass und einem Auslass ausgestatteten Ventilkörper, wobei der Einlass über eine Einlassleitung mit einer ein Hochdruckmedium aufnehmenden Hochdruckkammer und der Auslass mit einem Abflusssystem verbunden sind,
einen in dem Ventilkörper beliebig axial bewegbaren Ventilkolben,
eine Stellvorrichtung für das Hochdruckventil, mittels derer der Ventilkolben axial bewegbar ist,
wobei der Ventilkolben eine axiale Innenbohrung mit einer quer liegenden Verbindungsöffnung aufweist, und
in einer ersten axialen Position des Ventilkolbens eine Verbindung für das Hochdruckmedium über die Einlassleitung durch die Verbindungsöffnung und die Innenbohrung zu dem Abflusssystem gegeben ist,
wobei ein sich mindestens in einem Abschnitt des Ventilkolbens bis hin zum Auslass erstreckender Ringspalt zwischen dem Ventilkolben und dem Ventilkörper vorgesehen ist,
wobei sich in mindestens einer zweiten axialen Position des Ventilkolbens, in der die Verbindung für das Hochdruckmedium durch die Verbindungsöffnung verschlossen ist, der Ringspalt des Ventilkolbens bis zu dem seitlichen Einlass des Ventilkörpers hin erstreckt.

Wenn in der vorliegenden Anmeldung der Begriff "Ventilkolben" verwendet wird, dann ist dies im Prinzip synonym mit dem in der Hochdrucktechnik allgemein verwendeten Begriff der "Ventilspindel."

Die im Rahmen der vorliegenden Erfindung vorgesehene axiale Innenbohrung hat insbesondere den Vorteil, dass sie beispielsweise einen schnellen Wechsel von einer Stellung mit maximaler Druckabsenkung zu einer Stellung mit minimaler Druckabsenkung ermöglicht, da für den Wechsel zwischen diesen extremen Stellungen ein kürzerer Hub des Ventilkolbens erforderlich ist, verglichen mit aus dem Stand der Technik bekannten Lösungen.

Die oben erwähnte Stellvorrichtung kann insbesondere so ausgebildet sein, dass sie ein stufenloses Bewegen des Ventilkolbens in axialer Richtung ermöglicht.

Die Stellvorrichtung kann beispielsweise eine Steuervorrichtung für eine gesteuerte Bewegung des Ventilkolbens sein oder mit einer solchen Steuervorrichtung in Wirkverbindung stehen. Die Stellvorrichtung kann auch beispielsweise eine Regelvorrichtung sein, wenn eine geregelte Druckentlastung über das Hochdruckventil vorgesehen ist.

Wenn in der obigen Beschreibung beschrieben wird, dass eine Verbindung für das Hochdruckmedium über die Einlassleitung durch die Verbindungsöffnung und die Innenbohrung zu dem Abflusssystem geschaffen wird, dann kann alternativ der Strömungsweg auch umgekehrt über die Einlassleitung zunächst durch die Innenbohrung und dann durch die Verbindungsöffnung zu dem Abflusssystem verlaufen. Das Fluid strömt somit bei dieser möglichen Variante in umgekehrter Richtung durch das Hochdruckventil. Bei dieser Variante muss allerdings das Verstellen des Ventilkolbens gegen den anliegenden hohen Druck des Fluids erfolgen und die Stellvorrichtung muss folglich hinsichtlich ihrer Abmessungen und Belastbarkeit entsprechend ausgelegt werden.

Zum Hochdruckventil gehört eine Stellvorrichtung, mittels derer das Hochdruckventil beispielsweise geregelt wird, indem der Ventilkolben in axialer Richtung verschoben wird. Das Hochdruckventil hat einen mit einem beispielsweise seitlichen Einlass und einem Auslass ausgestalteten Ventilkörper, wobei der Einlass über die Einlassleitung direkt oder via ein zwischengeschaltetes Hochdruck-Absperrventil mit der Hochdruckkammer verbunden sein kann und der Auslass mit dem Abflusssystem verbunden ist. Das genannte Hochdruck-Absperrventil wird verwendet, damit man die Einlassleitung stromaufwärts des Hochdruckventils separat absperren kann, so dass der Druck nicht permanent an dem Hochdruckventil anliegt.

Der Ventilkolben ist in dem Ventilkörper vorzugsweise axial stufenlos bewegbar (verschiebbar), so dass beliebige Stellungen des Ventilkolbens einstellbar sind. Der Ventilkolben verfügt über eine vorzugsweise mittig konzentrisch angeordnete Innenbohrung mit einer vorzugsweise radialen Verbindungsöffnung, wodurch eine erste mögliche Verbindung für das aus der Hochdruckkammer ausströmende Hochdruckmedium geschaffen wird, bei der der Strömungsweg über die Einlassleitung und die Innenbohrung zu dem Abflusssystem führt. Zusätzlich ist ein sich mindestens in einem Abschnitt des Ventilkolbens bis hin zum Auslass erstreckender Ringspalt zwischen dem Ventilkolben und dem Ventilkörper vorgesehen, so dass eine zweite mögliche Verbindung für aus der Hochdruckkammer ausströmendes Hochdruckmedium geschaffen wird, bei der der Strömungsweg von der Einlassleitung über den Einlass und den Ringspalt zum Auslass und anschließend zum Abflusssystem führt.

Durch die Auswahl der jeweiligen Axialstellung des Ventilkolbens kann man somit das Volumen des pro Zeiteinheit aus der Hochdruckkammer zum Auslass hin ausströmenden Hochdruckmediums steuern, wodurch beispielsweise eine geregelte Druckentspannung erfolgen kann.

In der Hochdruckkammer können anfänglich Drücke von mehreren Tausend bar herrschen, wobei die erste Phase der Druckentspannung bis zu einem Druck von beispielsweise etwa 400 bar in der Regel unproblematisch ist. Danach sollte jedoch die weitere Druckabsenkung geregelt erfolgen. In der oben erwähnten ersten axialen Position des Ventilkolbens besteht eine Verbindung für das Hochdruckmedium über die Einlassleitung durch die Verbindungsöffnung und die Innenbohrung zu dem Abflusssystem. Diese Innenbohrung bietet dem Fluid einen vergleichsweise großen Querschnitt, so dass diese erste Position als quasi ungeregelte Offenstellung für einen rascheren Abfluss des Fluids aus der Hochdruckkammer genutzt werden kann.

Erfindungsgemäß erstreckt sich in mindestens einer zweiten axialen Position des Ventilkolbens, in der die Verbindung für das Hochdruckmedium durch die Verbindungsöffnung verschlossen ist, der Ringspalt des Ventilkolbens bis zu dem seitlichen Einlass des Ventilkörpers hin.

Wenn der Ventilkolben in dem Ventilkörper mittels der Regelvorrichtung axial in die zweite Position bewegt wird, in der die zum Einlass hin offene Verbindungsöffnung verschlossen ist, kann das Fluid nicht mehr über die Innenbohrung des Ventilkolbens abfließen, sondern nur noch über den Ringspalt zwischen dem Ventilkolben und dem Ventilkörper, wobei dieser Ringspalt dem Fluid einen wesentlich kleineren Durchflussquerschnitt bietet als die Innenbohrung des Ventilkörpers. In der zweiten Stellung steht der Ventilkolben so, dass der Weg durch den Ringspalt maximal lang ist, so dass dies einer Stellung mit kleinstem möglichen Durchfluss entspricht.

In einer dritten axialen Position steht der Ventilkolben in dem Ventilkörper so, dass ebenfalls die Verbindungsöffnung zu der Innenbohrung hin geschlossen ist, so dass das Fluid nur durch den engen Ringspalt strömen kann, wobei aber hier der Ventilkolben so steht, dass der Weg durch den Ringspalt minimal lang ist, so dass dies einer Stellung mit größtem möglichen (geregelten) Durchfluss entspricht. Dadurch dass der Ventilkolben in dem Ventilkörper zwischen der zweiten Stellung und der dritten Stellung stufenlos verschiebbar ist, können beliebige Zwischenstellungen eingenommen werden, wodurch eine gewünschte Kennlinie der Druckentspannung möglich ist. In der zweiten Stellung mit dem kleinsten möglichen Durchfluss erfolgt dabei ein sehr langsames Entspannen.

Weiterhin kann gemäß einer Weiterbildung der Erfindung der Ringspalt zwischen dem Ventilkolben und dem Ventilkörper unterschiedlich gestaltet sein. Beispielsweise kann der Ventilkörper oder der Ventilkolben in wenigstens einem Teil des Bereichs des Ringspalts eine Wendelnut aufweisen. Diese Wendelnut kann sich von jenseits der Verbindungsöffnung hin bis zum Auslass über die gesamte Länge ausdehnen. Bei Bedarf kann alternativ auch nur ein Teilbereich des Ringspaltes mit einer Wendelnut versehen sein.

Um den Druck in der Hochdruckkammer schneller abzusenken, ohne dabei Erosion entstehen zu lassen, kann vorzugsweise der Ventilkolben in Richtung zum Auslass hin mit einer sich zunehmend vertiefenden Wendelnut gestaltet sein. Dies ermöglicht es, mehr Hochdruckmedium in kurzer Zeit durch das Hochdruckventil abfließen zu lassen, folglich den Druck in der Hochdruckkammer schneller zu reduzieren. Dadurch kann man den Progressionsgrad der Ventilkennlinie weiter steigern.

Je nach Anforderung kann der Ventilkolben auch in Richtung zum Auslass hin mit einer gleichbleibenden Wendelnut gestaltet sein.

Analog gilt dies auch für eine nicht in dem Ventilkolben, sondern im Ventilkörper ausgearbeitete Wendelnut. Diese Wendelnut im Ventilkörper kann in Richtung zum Auslass hin als eine sich zunehmend vertiefende oder gleichbleibende Nut gestaltet sein.

Eine andere vorteilhafte Ausführungsvariante sieht vor, dass sich der Ringspalt progressiv aufweitet. Das hat den gleichen Effekt wie eine Wendelnut, die sich zunehmend vertieft. Eine Kombination -- der sich aufweitende Ringspalt mit einer sich zunehmend vertiefenden Wendelnut -- ist auch eine mögliche Variante, um den Druck in der Hochdruckkammer noch schneller abzubauen. Bei niedrigen Druckdifferenzen kommen auch andere Kombinationender sich aufweitende Ringspalt mit einer sich gleichbleibenden Wendelnut / Nut -- zum Einsatz.

Damit der Druck in der Hochdruckkammer schnell abgebaut wird, und dabei keine Erosion entstehen lässt, ist der Ringspalt bevorzugt mit einer Weite von 0 bis 50 Mikrometern, bevorzugt von 1 bis 10 Mikrometern ausgestaltet.

Gegenstand der vorliegenden Erfindung ist weiterhin ein Verfahren zur gesteuerten Druckabsenkung bei einer Hochdruckbehandlung von Produkten mit dem erfindungsgemäßen Hochdruckventil, wobei die Produkte in einer Hochdruckkammer von einem Hochdruckmedium beaufschlagt und mit einem Druck bis zu 10000 bar behandelt werden und das Hochdruckmedium aus der Hochdruckkammer entlang der Einlassleitung gesteuert durch das Hochdruckventil zum Abflusssystem entweicht, während der Druck in der Hochdruckkammer so reduziert wird, wobei der Durchfluss des Hochdruckmediums von der Hochdruckkammer zum Abflusssystem durch Verändern der Stellung des Hochdruckventils variiert wird.

Bei dem erfindungsgemäßen Verfahren können verschiedene Betriebszustände durch den Durchfluss des Hochdruckmediums charakterisiert werden und über die jeweilige Stellung des Ventilkolbens definiert werden, wobei die nachfolgende Nummerierung keine zeitliche Abfolge festlegt:
- in Betriebszustand "1" ist der Durchfluss maximal und das Hochdruckmedium strömt durch den Einlass ohne Umweg direkt durch die Verbindungsöffnung in die Innenbohrung und anschließend in den Auslass;
- in Betriebszustand "2" ist der Durchfluss minimal, da der Strömungsweg durch die Verbindungsöffnung verschlossen ist, so dass das Hochdruckmedium vom Einlass durch den Ringspalt zum Auslass strömt, wobei die Wegstrecke durch den Ringspalt maximal ist;
- in Betriebszustand "3" ist der Durchfluss kleiner als in Betriebszustand "1" und größer als in Betriebszustand "2", wobei der Strömungsweg durch die Verbindungsöffnung verschlossen ist, so dass das Hochdruckmedium vom Einlass durch den Ringspalt zum Auslass strömt, wobei die Wegstrecke durch den Ringspalt minimal ist.

Zwischen dem Betriebszustand "2" mit minimalem Durchfluss und dem Betriebszustand "3" mit maximalem Durchfluss über den Ringspalt sind beliebige Zwischenstellungen möglich.

Gemäß einer bevorzugten Weiterbildung des Verfahrens kann der Druck des Hochdruckmediums in der Hochdruckkammer gemessen werden, womit ermöglicht wird, die Stellung des Hochdruckventils so zu variieren, dass der Druck in der Hochdruckkammer in definierter Weise reduziert wird. Die Druckabsenkung kann so beispielsweise gemäß einer vorgegebenen Kennlinie erfolgen.

Gemäß einer bevorzugten Weiterbildung des erfindungsgemäßen Verfahrens kann man durch Einbringen einer Wendelnut in den Ventilkolben oder in den Ventilkörper im Bereich des Ringspalts weitere Varianten der Druckabsenkung schaffen, insbesondere kann man so eine progressive Kennlinie erzeugen.

Nachfolgend wird die vorliegende Erfindung anhand von Ausführungsbeispielen unter Bezugnahme auf die beiliegenden Zeichnungen näher erläutert. Dabei zeigen:
- Figur 1: eine schematisch vereinfachte Längsschnittdarstellung eines beispielhaften erfindungsgemäßen Hochdruckventils in der ungeregelten Offenstellung;
- Figur 2: einen vergrößerten Ausschnitt aus der schematisch vereinfachten Längsschnittdarstellung des Hochdruckventils von Figur 1, jedoch in einer Ventilstellung, in der nur ein minimaler Durchfluss des Fluids möglich ist;
- Figur 3: einen ähnlichen Ausschnitt aus der schematisch vereinfachten Längsschnittdarstellung eines beispielhaften erfindungsgemäßen Hochdruckventils wie in Figur 2, jedoch in einer Ventilstellung, in der ein maximaler geregelter Durchfluss des Fluids möglich ist;
- Figur 4: eine schematisch vereinfachte Längsschnittdarstellung einer alternativen Variante eines erfindungsgemäßen Hochdruckventils, bei der eine Wendelnut an der Ventilspindel vorgesehen ist.

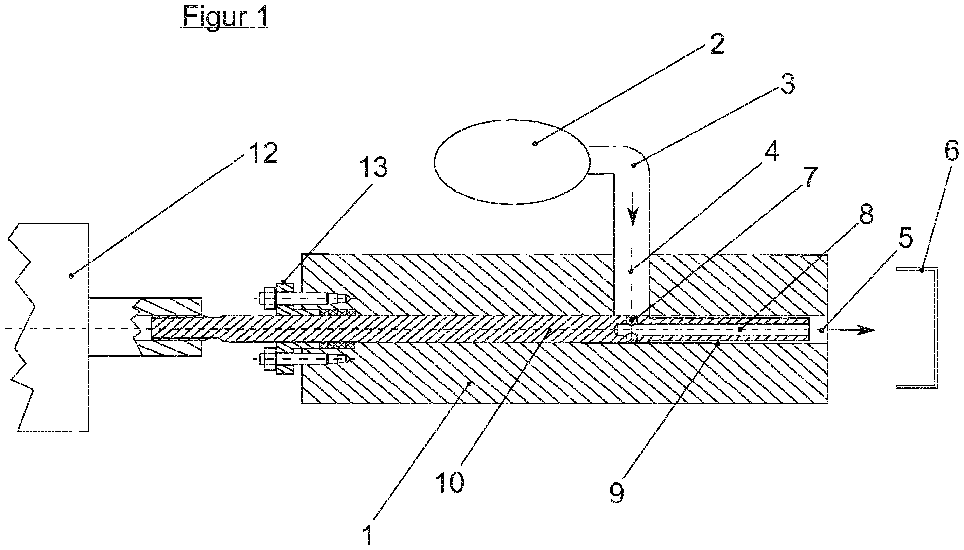

Nachfolgend wird zunächst auf die Figur 1 Bezug genommen. Das erfindungsgemäße Hochdruckventil umfasst einen Ventilkörper 1, innerhalb dessen ein Ventilkolben 10 in einer axialen Bohrung in axialer Richtung beweglich gelagert ist. Der Ventilkolben 10 wird mittels einer Stellvorrichtung 12 bewegt. Der Ventilkolben 10 ist gegenüber dem Ventilkörper 1 über eine Dichtvorrichtung 13 abgedichtet. In einer Hochdruckkammer 2 befindet sich ein Hochdruckmedium, welches über eine Einlassleitung 3 aus der Hochdruckkammer 2 ausströmen und über einen seitlichen Einlass 4 in dem Ventilkörper 1 in Richtung des Ventilkolbens 10 strömen kann. Der axial verschiebbare Ventilkolben 10 weist eine axiale Innenbohrung 8 auf, die sich über einen Teil seiner Länge erstreckt. Weiterhin hat der Ventilkolben 10 eine radial ausgerichtete Verbindungsöffnung 7, die nach radial außen hin offen ist und einen Zugang zu der axialen Innenbohrung 8 aufweist. In der in Figur 1 gezeigten ungeregelten Offenstellung befindet sich diese Verbindungsöffnung 7 in Höhe des Einlasses 4, so dass das Hochdruckmedium aus der Hochdruckkammer 2 über die Einlassleitung 3 und den Einlass 4 sowie die radiale Verbindungsöffnung 7 in die axiale Innenbohrung 8 des Ventilkolbens 10 gelangt und über diese Innenbohrung 8 im Inneren des Ventilkolbens in bezogen auf den Ventilkolben 10 axialer Richtung zum Auslass 5 des Ventilkörpers 1 strömen kann. Diese axiale Innenbohrung 8 hat einen ausreichend großen Querschnitt, so dass in diesem Betriebszustand ein maximaler Durchfluss des Hochdruckmediums aus der Hochdruckkammer 2 zum Auslass 5 erfolgt.

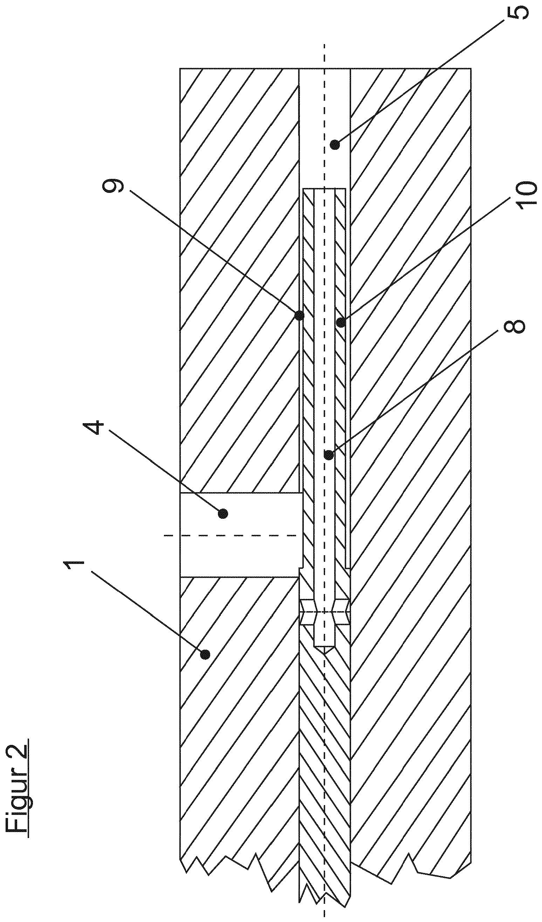

Nachfolgend wird auf die Figur 2 Bezug genommen. In einem Abschnitt jenseits der radialen Verbindungsöffnung 7 hat der Ventilkolben 10 einen leicht reduzierten Außendurchmesser, der beispielsweise hergestellt werden kann, indem der Ventilkolben 10 in diesem Abschnitt außen leicht angeschliffen wird. Dadurch ergibt sich ein verhältnismäßig enger Ringspalt 9 zwischen der äußeren Begrenzung des Ventilkolbens 10 und dem Innenumfang der axialen Bohrung innerhalb derer der Ventilkolben 10 in dem Ventilkörper 1 axial verschiebbar gelagert ist. Dieser Ringspalt 9 ermöglicht das Durchströmen eines Fluids in einer Stellung des Ventilkolbens 10 gemäß Figur 2, in der der Ventilkolben so steht, dass die radiale Verbindungsöffnung 7 verschlossen ist, so dass ein direktes Einströmen des Fluids über die Verbindungsöffnung 7 in die Innenbohrung 8 nicht möglich ist. Das Fluid nimmt in diesem Fall quasi den Umweg und strömt aus der Hochdruckkammer 2 über den Einlass 4 und über den engen Ringspalt 9 zum Auslass 5. Die in Figur 2 dargestellte Position des Ventilkolbens entspricht somit einem geregelten Betriebszustand mit kleinstem Durchfluss, da hier die von dem Fluid (in der Regel Wasser) durch den Ringspalt 9 zurück zu legende Strecke maximal ist.

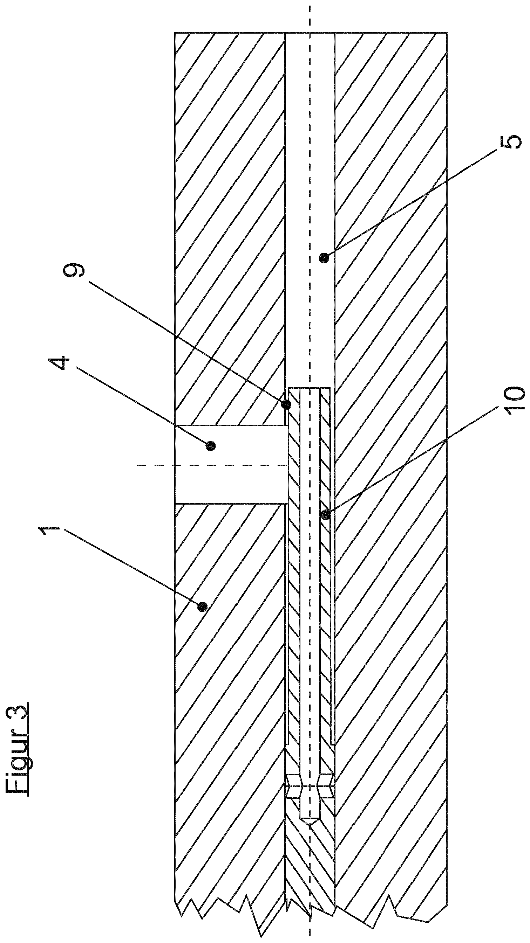

In Figur 3 ist ein Zustand mit größtem geregelten Durchfluss gezeigt. Durch geregeltes Bewegen des Ventilkolbens 10 in axialer Richtung wird in der Position gemäß Figur 3 ein Betriebszustand erreicht, bei dem diejenige Strecke, die das Fluid durch den Ringspalt 9 zurücklegen muss, um zu dem Auslass 5 zu gelangen, sehr kurz ist und somit hier der Strömungswiderstand für das Fluid minimal und dessen Durchfluss maximal ist.

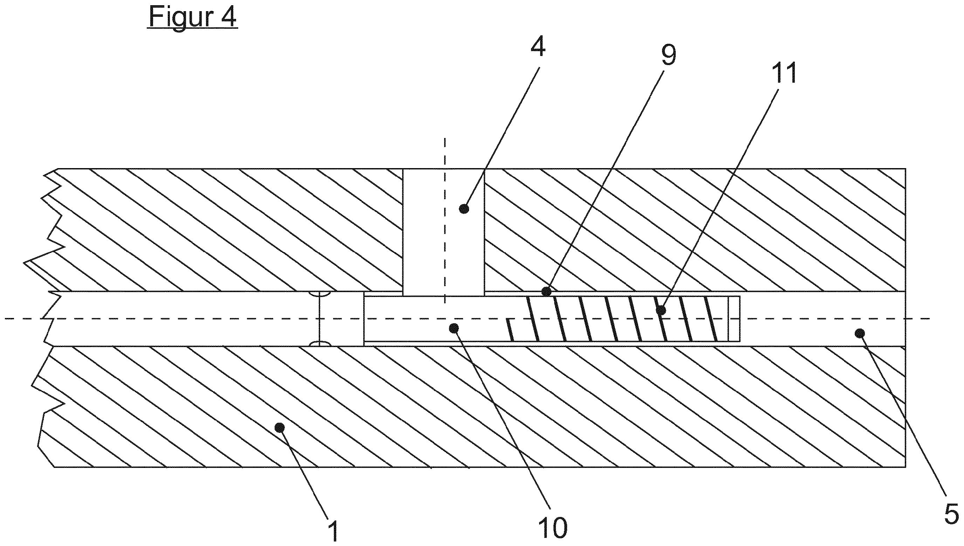

Figur 4 offenbart eine alternative Variante eines erfindungsgemäßen Hochdruckventils, bei der umfangsseitig in den Ventilkolben 10 eine Wendelnut 11 eingelassen ist. In der in Figur 4 gezeigten Stellung muss das Fluid zunächst über eine kurze Strecke durch den Ringspalt 9 strömen, um dann in die Wendelnut 11 zu gelangen, die dem Fluid einen größeren Querschnitt für den Durchfluss bietet und diesem somit einen geringeren Strömungswiderstand entgegensetzt als der Ringspalt. Durch Veränderung der axialen Position des Ventilkolbens 10 kann somit der Durchfluss des Fluids geregelt werden. Wenn die Stellung so ist, dass das Fluid direkt in die Wendelnut 11 gelangt, ist der Strömungswiderstand bereits geringer als bei der in Figur 4 gezeigten Position und wenn die durch die Wendelnut 11 zurückzulegende Strecke verkürzt wird, nimmt der Strömungswiderstand weiter ab. Bei der in Figur 4 gezeigten Variante kann somit eine progressive Kennlinie bei der geregelten Druckabsenkung erzielt werden.

Eine weitere mögliche Variante der Erfindung sieht vor, dass man in den Ventilkolben 10 außenseitig oder in den Ventilkörper 1 innenseitig eine Wendelnut 11 einbringt, die in ihrer Tiefe allmählich zunimmt, wodurch man den zuvor beschriebenen Einfluss der jeweiligen Stellung des Ventilkolbens 10, relativ zu dem Einlass 4, auf die Kennlinie bei der geregelten Druckabsenkung weiter verstärken kann.

Das erfindungsgemäße Hochdruckventil ermöglicht es dem Hochdruckmedium schnell und kontrolliert durch das Hochdruckventil von der Hochdruckkammer 2 zum Abflusssystem 6 zu gelangen, ohne dabei eine Erosion zu verursachen.

### Bezugszeichenliste:

- 1: Ventilkörper
- 2: Hochdruckkammer
- 3: Einlassleitung
- 4: Einlass
- 5: Auslass
- 6: Abflusssystem
- 7: Verbindungsöffnung
- 8: Innenbohrung
- 9: Ringspalt
- 10: Ventilkolben
- 11: Wendelnut
- 12: Stellvorrichtung
- 13: Dichtvorrichtung

## Patentansprüche

1. Hochdruckventil für eine gesteuerte Druckabsenkung bei einer Hochdruckbehandlung von Produkten umfassend:
einen mit einem in Bezug auf die Achse des Ventilkolbens seitlichen Einlass (4) und einem Auslass (5) ausgestatteten Ventilkörper (1), wobei der Einlass (4) über eine Einlassleitung (3) mit einer ein Hochdruckmedium aufnehmenden Hochdruckkammer (2) und der Auslass (5) mit einem Abflusssystem (6) verbindbar sind,
einen in dem Ventilkörper (1) beliebig axial bewegbaren Ventilkolben (10),
eine Stellvorrichtung (12) für das Hochdruckventil, mittels derer der Ventilkolben (10) axial bewegbar ist,
wobei der Ventilkolben (10) eine axiale Innenbohrung (8) mit einer quer liegenden Verbindungsöffnung (7) aufweist, und
in einer ersten axialen Position des Ventilkolbens (10) eine Verbindung für das Hochdruckmedium über die Einlassleitung (3) durch die Verbindungsöffnung (7) und die Innenbohrung (8) zu dem Abflusssystem (6) gegeben ist,
**dadurch gekennzeichnet, dass**
ein sich mindestens in einem Abschnitt des Ventilkolbens (10) bis hin zum Auslass (5) erstreckender Ringspalt (9) zwischen dem Ventilkolben (10) und dem Ventilkörper (1) vorgesehen ist,
wobei sich in mindestens einer zweiten axialen Position des Ventilkolbens (10), in der die Verbindung für das Hochdruckmedium durch die Verbindungsöffnung (7) verschlossen ist, der Ringspalt (9) des Ventilkolbens (10) bis zu dem seitlichen Einlass (4) des Ventilkörpers (1) hin erstreckt.

2. Hochdruckventil nach Anspruch 1, **dadurch gekennzeichnet, dass** der Ventilkörper (1) oder der Ventilkolben (10) in wenigstens einem Teil des Bereichs des Ringspalts (9) eine Wendelnut (11) aufweist.

3. Hochdruckventil nach Anspruch 2, **dadurch gekennzeichnet, dass** sich der Querschnitt der Wendelnut (11) in Richtung zum Auslass (5) hin vergrößert.

4. Hochdruckventil nach Anspruch 2, **dadurch gekennzeichnet, dass** der Querschnitt der Wendelnut (11) in Richtung zum Auslass (5) hin gleich bleibt.

5. Hochdruckventil nach einem der Ansprüche 1 bis 4, **dadurch gekennzeichnet, dass** sich der Ringspalt (9) in Richtung zum Auslass (5) hin aufweitet.

6. Verfahren zur gesteuerten Druckabsenkung bei einer Hochdruckbehandlung von Produkten mit dem erfindungsgemäßen Hochdruckventil nach den Ansprüchen 1 bis 5, wobei die Produkte in einer Hochdruckkammer (2) von einem Hochdruckmedium beaufschlagt und mit einem Druck bis zu 10000 bar behandelt werden, wobei das Hochdruckmedium aus der Hochdruckkammer (2) entlang der Einlassleitung (3) gesteuert durch das Hochdruckventil zum Abflusssystem (6) entweicht, während der Druck in der Hochdruckkammer reduziert wird, wobei der Durchfluss des Hochdruckmediums von der Hochdruckkammer (2) zum Abflusssystem (6) durch die Stellung des Hochdruckventils variiert wird,
wobei verschiedene Betriebszustände durch den Durchfluss des Hochdruckmediums charakterisiert werden können und über die jeweilige Stellung des Ventilkolbens (10) definiert werden, wobei die nachfolgende Nummerierung keine zeitliche Abfolge festlegt:
• in Betriebszustand "1" ist der Durchfluss maximal und das Hochdruckmedium strömt durch den Einlass (4) ohne Umweg direkt durch die Verbindungsöffnung (7) in die Innenbohrung (8) und anschließend in den Auslass (5);
• in Betriebszustand "2" ist der Durchfluss minimal, da der Strömungsweg durch die Verbindungsöffnung (7) verschlossen ist, so dass das Hochdruckmedium vom Einlass (4) durch den Ringspalt (9) zum Auslass (5) strömt, wobei die Wegstrecke durch den Ringspalt maximal ist;
• in Betriebszustand "3" ist der Durchfluss kleiner als in Betriebszustand "1" und größer als in Betriebszustand "2", wobei der Strömungsweg durch die Verbindungsöffnung (7) verschlossen ist, so dass das Hochdruckmedium vom Einlass (4) durch den Ringspalt (9) zum Auslass (5) strömt, wobei die Wegstrecke durch den Ringspalt minimal ist.

7. Verfahren nach Anspruch 6, **dadurch gekennzeichnet, dass** der Druck des Hochdruckmediums in der Hochdruckkammer (2) gemessen wird, und abhängig von der Messung die Stellung des Hochdruckventils so variiert wird, dass der Druck in der Hochdruckkammer (2) in definierter Weise, insbesondere gemäß einer vorgegebenen Kennlinie, reduziert wird.

8. Verfahren nach einem der Ansprüche 6 oder 7, **dadurch gekennzeichnet, dass** man durch Einbringen einer Wendelnut (11) in den Ventilkolben (10) oder in den Ventilköper (1) oder durch einen sich vergrößernden Ringspalt eine progressive Kennlinie bei der Druckabsenkung erzeugt.

## Claims

1. High-pressure valve for a controlled pressure reduction in a high-pressure treatment of products comprising:
a valve body (1) equipped with an inlet (4) lateral with respect to the axis of the valve piston and an outlet (5), the inlet (4) being connected via an inlet line (3) to a high-pressure chamber (2) receiving a high-pressure medium and the outlet (5) connectable to a drainage system (6),
a valve piston (10) that can be moved axially as desired in the valve body (1),
a positioning device (12) for the high-pressure valve, by means of which the valve piston (10) can be moved axially,
wherein the valve piston (10) has an axial inner bore (8) with a transverse connecting opening (7), and
in a first axial position of the valve piston (10), there is a connection for the high-pressure medium via the inlet line (3) through the connection opening (7) and the inner bore (8) to the drain system (6), **characterized in that**
an annular gap (9) extending at least in a portion of the valve piston (10) to the outlet (5) is provided between the valve piston (10) and the valve body (1),
wherein in at least a second axial position of the valve piston (10), in which the connection for the high-pressure medium is closed by the connection opening (7), the annular gap (9) of the valve piston (10) extends up to the lateral inlet (4) of the valve body (1).

2. High-pressure valve according to claim 1, **characterized in that** the valve body is (1) or the valve piston (10) has a helical groove (11) in at least part of the region of the annular gap (9).

3. High-pressure valve according to claim 2, **characterized in that** the cross-section of the helical groove (11) increases in the direction towards the outlet (5).

4. High-pressure valve according to claim 2, **characterized in that** the cross-section of the helical groove (11) remains the same in the direction towards the outlet (5).

5. High-pressure valve according to one of claims 1 to 4, **characterized in that** the annular gap (9) widens in the direction towards the outlet (5).

6. Method for controlled pressure reduction in a high-pressure treatment of products with the high-pressure valve of the invention according to claims 1 to 5, wherein the products are acted upon by a high-pressure medium in a high-pressure chamber (2) and are treated with a pressure of up to 10000 bar, wherein the high-pressure medium escapes from the high-pressure chamber (2) along the inlet line (3) in a controlled manner through the high-pressure valve to the discharge system (6) while the pressure in the high-pressure chamber is reduced, wherein the flow of the high-pressure medium from the high-pressure chamber (2) to the discharge system (6) is varied by the position of the high-pressure valve,
whereby different operating states can be **characterized by** the flow of the high-pressure medium and are defined by the respective position of the valve piston (10), whereby the following numbering does not define a time sequence:
• in operating condition "1", the flow rate is maximum and the high-pressure medium flows through the inlet (4) directly through the connection opening (7) into the inner bore (8) and then into the outlet (5) without any detour;
• in operating state "2", the flow is minimal, since the flow path through the connection opening (7) is closed, so that the high-pressure medium from the inlet (4) flows through the annular gap (9) to the outlet (5), the distance through the annular gap being at a maximum;
• in operating condition "3" the flow is less than in operating condition "1" and greater than in operating condition "2", the flow path through the connecting opening (7) being closed so that the high-pressure medium from the inlet (4) passes through the annular gap (9) flows to the outlet (5), the distance through the annular gap being minimal.

7. Method according to claim 6, **characterized in that** the pressure of the high-pressure medium in the high-pressure chamber (2) is measured, and depending on the measurement, the position of the high-pressure valve is varied in such a way that the pressure in the high-pressure chamber (2) is reduced in a defined manner, in particular according to a predetermined characteristic curve.

8. Method according to any one of claims 6 or 7, **characterized in that**, by introducing a helical groove (11) into the valve piston (10) or into the valve body (1) or by an increasing a progressive characteristic curve is generated during the pressure reduction.

## Revendications

1. Soupape haute pression pour une réduction contrôlée de la pression dans un traitement haute pression de produits comprenant :
un corps de soupape (1) équipé d'une entrée (4) latérale par rapport à l'axe du piston de soupape et d'une sortie (5), l'entrée (4) étant reliée par une conduite d'entrée (3) à une chambre haute pression (2) recevant un fluide haute pression et la sortie (5) pouvant être reliée à un système de drainage (6),
un piston de soupape (10) qui peut être déplacé axialement à volonté dans le corps de soupape (1),
un dispositif de positionnement (12) pour la soupape à haute pression, au moyen duquel le piston de la soupape (10) peut être déplacé axialement,
dans lequel le piston de soupape (10) a un alésage intérieur axial (8) avec une ouverture de connexion transversale (7), et
dans une première position axiale du piston de la soupape (10), le fluide haute pression est relié au système de drainage (6) par la conduite d'entrée (3), via l'ouverture de connexion (7) et l'alésage intérieur (8),
**caractérisé par le fait que**
un espace annulaire (9) s'étendant au moins sur une partie du piston de la soupape (10) jusqu'à la sortie (5) est prévu entre le piston de la soupape (10) et le corps de la soupape (1),
dans laquelle, dans au moins une deuxième position axiale du piston de soupape (10), dans laquelle la connexion pour le fluide à haute pression est fermée par l'ouverture de connexion (7), l'espace annulaire (9) du piston de soupape (10) s'étend jusqu'à l'entrée latérale (4) du corps de soupape (1).

2. Valve haute pression selon la revendication 1, **caractérisée par le fait que** le corps de valve (1) ou le piston de valve (10) présente une rainure hélicoïdale (11) dans au moins une partie de la zone de l'espace annulaire (9).

3. Valve haute pression selon la revendication 2, **caractérisée par le fait que** la section de la rainure hélicoïdale (11) augmente en direction de la sortie (5).

4. Valve haute pression selon la revendication 2, **caractérisée par le fait que** la section transversale de la rainure hélicoïdale (11) reste la même en direction de la sortie (5).

5. Valve haute pression selon l'une des revendications 1 à 4, **caractérisée par le fait que** l'espace annulaire (9) s'élargit en direction de la sortie (5).

6. Procédé de réduction contrôlée de la pression dans un traitement haute pression de produits avec la soupape haute pression de l'invention selon les revendications 1 à 5, dans lequel les produits sont soumis à l'action d'un fluide haute pression dans une chambre haute pression (2) et sont traités avec une pression allant jusqu'à 10000 bar, dans lequel le fluide haute pression s'échappe de la chambre haute pression (2) le long de la conduite d'entrée (3) de manière contrôlée à travers la soupape haute pression vers le système de décharge (6) tandis que la pression dans la chambre haute pression est réduite, dans lequel le flux du fluide haute pression de la chambre haute pression (2) vers le système de décharge (6) est modifié par la position de la soupape haute pression,
les différents états de fonctionnement peuvent être **caractérisés par** l'écoulement du fluide à haute pression et sont définis par la position respective du piston de la vanne (10), la numérotation suivante ne définissant pas une séquence temporelle :
- dans l'état de fonctionnement "1", le débit est maximal et le fluide haute pression s'écoule par l'entrée (4) directement à travers l'ouverture de raccordement (7) dans l'alésage intérieur (8), puis dans la sortie (5) sans aucun détour ;
- dans l'état de fonctionnement "2", le débit est minimal, car la voie d'écoulement à travers l'ouverture de raccordement (7) est fermée, de sorte que le fluide à haute pression provenant de l'entrée (4) s'écoule à travers l'espace annulaire (9) vers la sortie (5), la distance à travers l'espace annulaire étant maximale ;
- dans l'état de fonctionnement "5", le débit est inférieur à celui de l'état de fonctionnement "1" et supérieur à celui de l'état de fonctionnement "2", la voie d'écoulement à travers l'ouverture de connexion (7) étant fermée de sorte que le fluide à haute pression provenant de l'entrée (4) passe à travers l'espace annulaire (9) et s'écoule vers la sortie (5), la distance à travers l'espace annulaire étant minime.

7. Procédé selon la revendication 6, **caractérisé en ce que** la pression du fluide haute pression dans la chambre haute pression (2) est mesurée, et en fonction de la mesure, la position de la soupape haute pression est modifiée de manière à ce que la pression dans la chambre haute pression (2) soit réduite d'une manière définie, en particulier selon une courbe caractéristique prédéterminée.

8. Procédé selon l'une quelconque des revendications 6 ou 7, **caractérisé par le fait que** l'introduction d'une rainure hélicoïdale (11) dans le piston de la soupape (10) ou dans le corps de la soupape (1) ou l'augmentation d'une courbe caractéristique progressive est générée pendant la réduction de la pression.
